# EUROPEAN PATENT APPLICATION

(11) **EP 4 624 025 A1**
(43) Date of publication of application: **01.10.2025**
(21) Application number: 25164170.0
(22) Date of filing: 17.03.2025
(51) Int. Cl.: B01D 53/32

(54) **EXHAUST GAS TREATMENT APPARATUS AND EXHAUST GAS TREATMENT METHOD**

(30) Priority: 19.03.2024 JP 2024043618
(71) Applicant: EBARA CORPORATION, Ota-ku, Tokyo 144-8510 (JP)
(72) Inventor: KITO, Masato, Tokyo, 1448510 (JP); CHUJO, Takayuki, Tokyo, 1448510 (JP); KAWASHIMA, Naoya, Tokyo, 1448510 (JP); MIZUKOSHI, Kai, Tokyo, 1448510 (JP); KYOTANI, Takashi, Tokyo, 1448510 (JP)
(74) Representative: Klang, Alexander H.

(57) **Abstract**

The present invention provides an exhaust gas treatment apparatus capable of preventing corrosion of a gas treatment reactor and improving a reaction efficiency with a processing gas. The exhaust gas treatment apparatus includes a liquid supply line configured to supply a liquid to a torch unit and then supply the liquid heated by the torch unit to the gas treatment reactor.

## Description

### BACKGROUND OF THE INVENTION

### Field of the Invention:

The present invention relates to an exhaust gas treatment apparatus and an exhaust gas treatment method.

### Description of the Related Art:

There is a detoxification apparatus (one example of an exhaust gas treatment apparatus) that treats a gas to make it harmless. Known detoxification methods for the gas include a wet method in which the processing gas is brought into contact with a liquid to remove foreign matter and water-soluble components, and a combustion method in which the processing gas is combusted.

### Citation List

### Patent Literature

Patent document 1: Japanese laid-open patent publication No. 2008-161861

When the processing gas is thermally decomposed at high temperature, it is necessary to react a thermally decomposed processing gas with some substance in order to prevent recombination of the thermally decomposed processing gas. Water generates hydrogen atoms and oxygen atoms by its thermal decomposition, and the thermally decomposed processing gas reacts with these atoms. Therefore, water is suitable as a substance to react with the thermally decomposed processing gas. In particular, vaporized water (i.e., steam, water vapor) can react with the processing gas with less energy than water existing as a liquid.

A method of using water circulated between a water tank and a gas treatment reactor as water to react with the thermally decomposed processing gas is considered. However, when such circulating water is used, the reaction products of the processing gas are gradually concentrated in the circulating water, and as a result, there is a risk that the gas treatment reactor will be corroded due to the acid of the reaction products.

On the other hand, a method of using fresh water (i.e., water supplied from a water supply source) instead of the circulating water can be considered, but using fresh water with a low temperature may result in a low reaction efficiency with the processing gas.

### SUMMARY OF THE INVENTION

Therefore, the present invention provides an exhaust gas treatment apparatus and an exhaust gas treatment method that can prevent corrosion of a gas treatment reactor and improve a reaction efficiency with the processing gas.

In an embodiment, there is provided an exhaust gas treatment apparatus comprising: a torch unit configured to generate a high-temperature jet; a gas treatment reactor having a gas flow path through which a processing gas thermally decomposed by the jet flows; a liquid supply line configured to supply a liquid to the torch unit and then supply the liquid heated by the torch unit to the gas treatment reactor; and a liquid supply source connected to the liquid supply line.

In an embodiment, the torch unit comprises: a cathode chamber in which a cathode is disposed; and an anode chamber in which an anode is disposed, and the liquid supply line comprises: a cathode side supply line configured to supply the liquid to the cathode chamber; and an anode side supply line configured to supply the liquid to the anode chamber.

In an embodiment, the liquid supply line has a junction line connected to the cathode side supply line and the anode side supply line.

In an embodiment, at least one of the cathode side supply line and the anode side supply line is connected to the gas treatment reactor.

In an embodiment, the torch unit comprises: a cathode chamber in which a cathode is disposed; and an anode chamber in which an anode is disposed, and the liquid supply line is configured to supply the liquid to one of the cathode chamber and the anode chamber, and then supply the liquid to the other of the cathode chamber and the anode chamber.

In an embodiment, the liquid supply line is configured to supply the liquid to an upper portion of the gas treatment reactor.

In an embodiment, the gas treatment reactor comprises: an inner cylinder configured to form the gas flow path; and an outer cylinder configured to surround the inner cylinder, and the inner cylinder has an upper end that serves as an overflow weir for the liquid supplied from the liquid supply line.

In an embodiment, the exhaust gas treatment apparatus comprises a gas-liquid separation tank connected to the liquid supply line, and the gas-liquid separation tank is disposed downstream of the torch unit in a flow direction of the liquid.

In an embodiment, the gas-liquid separation tank comprises: a gas introduction line connected to the outer cylinder at a position higher than the upper end; and a liquid introduction line connected to the outer cylinder at a position lower than the upper end.

In an embodiment, the inner cylinder has a flow path throttle portion configured to narrow the gas flow path.

In an embodiment, the exhaust gas treatment apparatus comprises a spray nozzle configured to inject the liquid into the gas flow path.

In an embodiment, the exhaust gas treatment apparatus is an atmospheric pressure plasma type exhaust gas treatment apparatus, and the torch unit has a non-transferred plasma torch structure.

In an embodiment, there is provided an exhaust gas treatment method comprising: supplying a liquid supplied from a liquid supply source to a torch unit configured to generate a high-temperature jet; and then, supplying the liquid heated by the torch unit to a gas treatment reactor having a gas flow path through which a processing gas thermally decomposed by the jet flows.

In an embodiment, supplying the liquid to a cathode chamber in which a cathode is disposed and an anode chamber in which an anode is disposed in the torch unit.

In an embodiment, supplying the liquid to one of the cathode chamber and the anode chamber, and then supplying the liquid to the other of the cathode chamber and the anode chamber.

In an embodiment, separating a gas contained in the liquid after passing through the torch unit; supplying the gas to a position higher than an upper end of an inner cylinder configured form the gas flow path of the gas treatment reactor; and supplying the liquid to a position lower than the upper end.

The liquid supply line is configured to supply the liquid supplied from the liquid supply source to the torch unit, and then supply the liquid heated by the torch unit to the gas treatment reactor. Therefore, the exhaust gas treatment apparatus can prevent corrosion of the gas treatment reactor and improve the reaction efficiency with the processing gas.

The exhaust gas treatment apparatus can prevent corrosion of the gas treatment reactor due to acid, particularly after reaction of the processing gas, and can improve the reaction efficiency with the processing gas due to the high reactivity of the heated liquid.

### BRIEF DESCRIPTION OF THE DRAWINGS

FIG. 1 is a view showing an embodiment of an exhaust gas treatment apparatus;
FIG. 2 is a view showing another embodiment of the liquid supply line;
FIG. 3 is a view showing another embodiment of the liquid supply line;
FIG. 4 is a view showing another embodiment of the liquid supply line;
FIG. 5 is a view showing another embodiment of the liquid supply line;
FIG. 6 is a view showing one embodiment of a gas-liquid separation tank;
FIG. 7 is a view showing the gas-liquid separation tank shown in FIG. 6;
FIG. 8 is a view showing another embodiment of the gas treatment reactor; and
FIG. 9 is a view showing a spray nozzle that injects liquid into the gas flow path.

### DESCRIPTION OF EMBODIMENTS

Hereinafter, embodiments of the present invention will be described with reference to the drawings. In the drawings described below, the same or corresponding components are denoted by the same reference numerals, and duplicated descriptions will be omitted. In the multiple embodiments described below, configuration of one embodiment that is not particularly described is the same as other embodiments, and duplicated descriptions will be omitted.

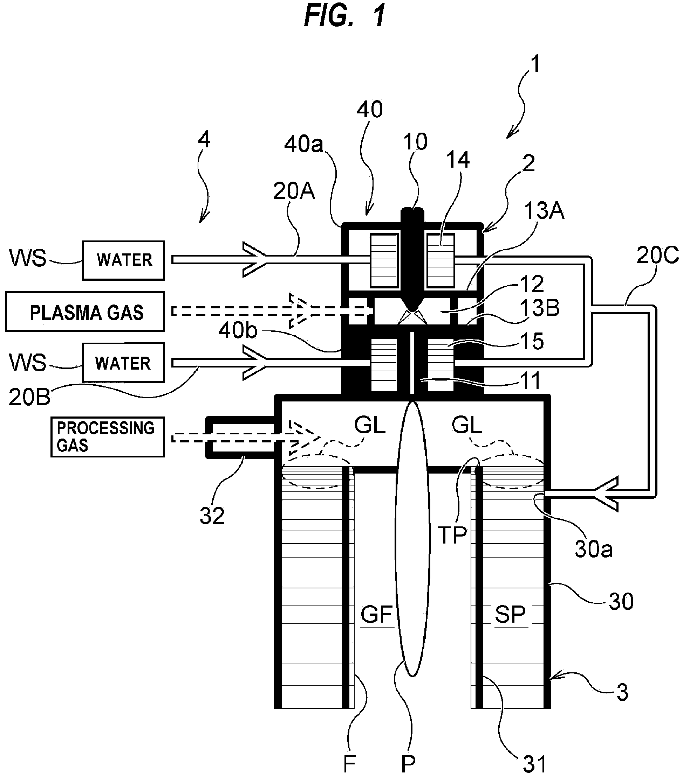

FIG. 1 is a view showing an embodiment of an exhaust gas treatment apparatus. For example, an exhaust gas treatment apparatus 1 is provided to render a gas (processing gas) from a vacuum pump harmless. In this case, a vacuum pump (not shown) is coupled to a primary side (upstream side) of the exhaust gas treatment apparatus 1.

In this embodiment, the exhaust gas treatment apparatus 1 is an atmospheric pressure plasma type exhaust gas treatment apparatus. As shown in FIG. 1, the exhaust gas treatment apparatus 1 includes a torch unit 2 that generates a high-temperature jet (more specifically, a plasma jet P) and a gas treatment reactor 3 having a gas flow path GF through which the processing gas thermally decomposed by the plasma jet P flows.

The torch unit 2 includes a cathode 10 and an anode 11 facing each other, and a torch body portion 40 that houses the cathode 10 and the anode 11. The torch unit 2 has a non-transferred plasma torch structure.

More specifically, the torch unit 2 has a structure for spraying plasma generated between the cathode 10 and the anode 11. Although not shown, the exhaust gas treatment apparatus 1 includes a power source that applies a voltage between the anode 10 and the cathode 11.

The torch body portion 40 has a cathode housing portion 40a that houses the cathode 10, and an anode housing portion 40b that houses the anode 11. The cathode housing portion 40a has a space (cathode chamber) 14 for cooling the cathode 10. The cathode 10 is disposed in the cathode chamber 14. The anode housing portion 40b has a space (anode chamber) 15 for cooling the anode 11. The anode 11 is disposed in the anode chamber 15.

The cathode housing portion 40a and the anode housing portion 40b are partitioned by partition walls 13A and 13B disposed between the cathode housing portion 40a and the anode housing portion 40b. The torch body portion 40 has a space (plasma generation chamber 12) surrounded by the partition walls 13A and 13B.

When a plasma gas is supplied to the plasma generation chamber 12 (see FIG. 1) and a predetermined discharge voltage is applied to the cathode 10 and the anode 11, a plasma arc is generated and a plasma jet P is sprayed from the torch unit 2 toward the gas treatment reactor 3.

The gas treatment reactor 3 includes an inner cylinder 31 that forms a gas flow path GF, an outer cylinder 30 that surrounds the inner cylinder 31, and a processing gas inlet 32 that is connected to an upper portion of the outer cylinder 30. The inner cylinder 31 and the outer cylinder 30 are concentrically arranged.

Both the inner cylinder 31 and the outer cylinder 30 have a cylindrical shape. Therefore, an annular gap SP is formed between an outer wall surface of the inner cylinder 31 and an inner wall surface of the outer cylinder 30. The gap SP is disposed radially outward of the gas flow path GF.

The processing gas is introduced into the gas treatment reactor 3 through the processing gas inlet 32. The processing gas introduced from the processing gas inlet 32 comes into contact with the high-temperature plasma jet P sprayed from the torch unit 2 and is thermally decomposed. The thermally decomposed processing gas passes through the gas flow path GF and is processed in a liquid tank casing (not shown) and a process casing (not shown), and then is discharged to the outside.

As described above, in order to prevent recombination of the thermally decomposed processing gas, vaporized water (i.e., steam, water vapor) is suitable as a substance that reacts with the thermally decomposed processing gas. However, if water stored in the liquid tank casing is used, the gas treatment reactor 3 may be corroded due to the acid of the reaction products contained in the water. On the other hand, if low-temperature water (fresh water) is used, a relatively large amount of energy is required to react with the processing gas, and a reaction efficiency with the processing gas may be reduced.

In view of this, in this embodiment, the exhaust gas treatment apparatus 1 has a configuration that prevents corrosion of the gas treatment reactor 3 and improves the reaction efficiency with the processing gas. Such a configuration will be described below. In the following, in this specification, a term "liquid" is a concept that includes water.

The exhaust gas treatment apparatus 1 includes a liquid supply line 4 that supplies the liquid (more specifically, fresh water) to the torch unit 2 and then supplies the liquid heated in the torch unit 2 to the gas treatment reactor 3, and a liquid supply source WS connected to the liquid supply line 4.

The liquid supply line 4 is connected to the torch unit 2 and the gas treatment reactor 3, and is configured to supply the liquid that has passed through the torch unit 2 to the gas treatment reactor 3. In a flow direction of the liquid supplied from the liquid supply source WS, the torch unit 2 is disposed upstream of the gas treatment reactor 3.

In the embodiment shown in FIG. 1, the liquid supply line 4 has a cathode side supply line 20A that supplies the liquid supplied from the liquid supply source WS to the cathode chamber 14, and an anode side supply line 20B that supplies the liquid supplied from the liquid supply source WS to the anode chamber 15. The cathode side supply line 20A and the anode side supply line 20B are connected to separate liquid supply sources WS, but may be connected to a single liquid supply source WS.

The liquid supply line 4 further includes a junction line 20C connected to the cathode side supply line 20A and the anode side supply line 20B. The junction line 20C is connected to the outer cylinder 30 of the gas treatment reactor 3.

The liquid supplied from the liquid supply source WS is supplied to the cathode chamber 14 and the anode chamber 15 through the cathode side supply line 20A and the anode side supply line 20B. The cathode chamber 14 and the anode chamber 15 are filled with liquid. The cathode 10 and the anode 11 become hot due to the application of a voltage. Therefore, the liquid supplied to the cathode chamber 14 and the anode chamber 15 cools the cathode 10 and the anode 11.

The liquid heated by heat exchange with the cathode 10 and the anode 11 is supplied to the outer cylinder 30 through the junction line 20C. More specifically, the junction line 20C is connected to a communication port 30a formed in an upper portion of the outer cylinder 30. Therefore, the liquid flowing through the junction line 20C is supplied to the upper portion of the outer cylinder 30.

The inner cylinder 31 has an upper end TP that serves as an overflow weir for the liquid supplied from the liquid supply line 4. Therefore, the liquid supplied to the gas treatment reactor 3 gradually rises in the gap SP between the inner cylinder 31 and the outer cylinder 30, and overflows the upper end TP.

The liquid overflowing the upper end TP forms a liquid film F on the inner wall surface of the inner cylinder 31. The liquid film F can prevent foreign matter, such as reaction by-products formed by the processing gas, from accumulating on the inner cylinder 31. The entire inner wall surface of the inner cylinder 31 is covered with the liquid film F.

As shown in FIG. 1, a gas-liquid interface GL is formed at an upper end portion (i.e., radially outside the upper end TP of the inner cylinder 31) of the liquid film F. The gas-liquid interface GL is a boundary portion where a part of the liquid overflowing the upper end TP is vaporized. The space above the gas-liquid interface GL is filled with vaporized liquid (i.e., water vapor).

The processing gas inlet 32 is disposed at a position higher than the upper end TP. Therefore, the processing gas introduced from the processing gas inlet 32 and thermally decomposed by the plasma jet P actively reacts with the water vapor present above the gas-liquid interface GL. This improves the reaction efficiency of the processing gas with the water vapor.

In particular, the communication port 30a of the outer cylinder 30 is disposed adjacent to the upper end TP (i.e., the gas-liquid interface GL) of the inner cylinder 31. Therefore, by supplying heated liquid to the gas treatment reactor 3 through the communication port 30a, the space above the gas-liquid interface GL can be stably filled with water vapor. In this embodiment, the communication port 30a is disposed at a position lower than the upper end TP of the inner cylinder 31.

According to this embodiment, by supplying the liquid heated by the torch unit 2 to the gas treatment reactor 3, the space above the gas-liquid interface GL can be efficiently filled with water vapor, improving the reaction efficiency with the processing gas. Furthermore, by reacting the liquid (fresh water) supplied from the liquid supply source WS with the thermally decomposed processing gas, corrosion of the gas treatment reactor 3 can be prevented.

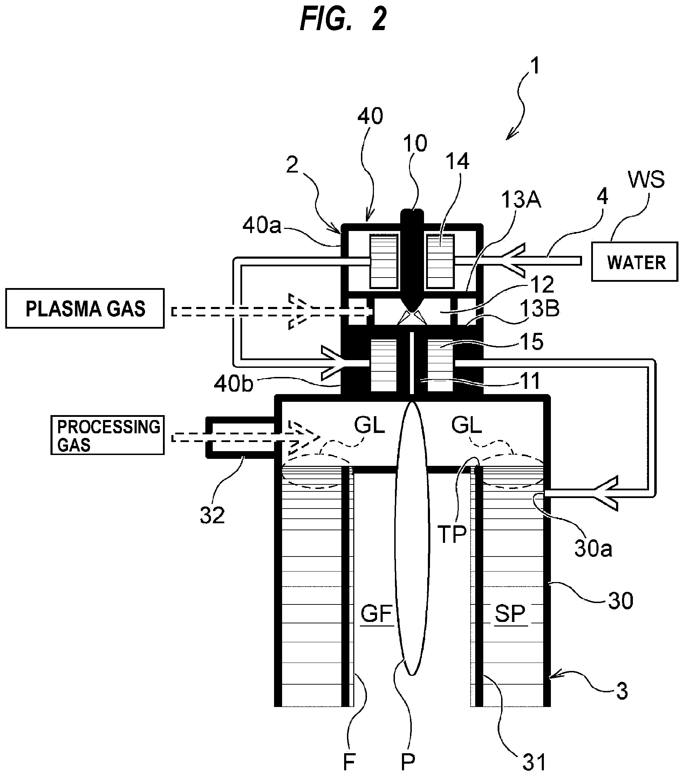

FIG. 2 is a view showing another embodiment of the liquid supply line. In the embodiment shown in FIG. 1, the liquid supply line 4 has a structure for cooling the cathode 10 and the anode 11 in parallel, but in the embodiment shown in FIG. 2, the liquid supply line 4 has a structure for cooling the cathode 10 and the anode 11 in series.

More specifically, the liquid supply line 4 is configured to supply the liquid to one of the cathode chamber 14 and the anode chamber 15, and thereafter to the other of the cathode chamber 14 and the anode chamber 15.

In the embodiment shown in FIG. 2, the liquid supply line 4 is configured to first supply the liquid to the cathode chamber 14, and then supply the liquid to the anode chamber 15. In one embodiment, the liquid supply line 4 may be configured to first supply the liquid to the anode chamber 15, and then supply the liquid to the cathode chamber 14.

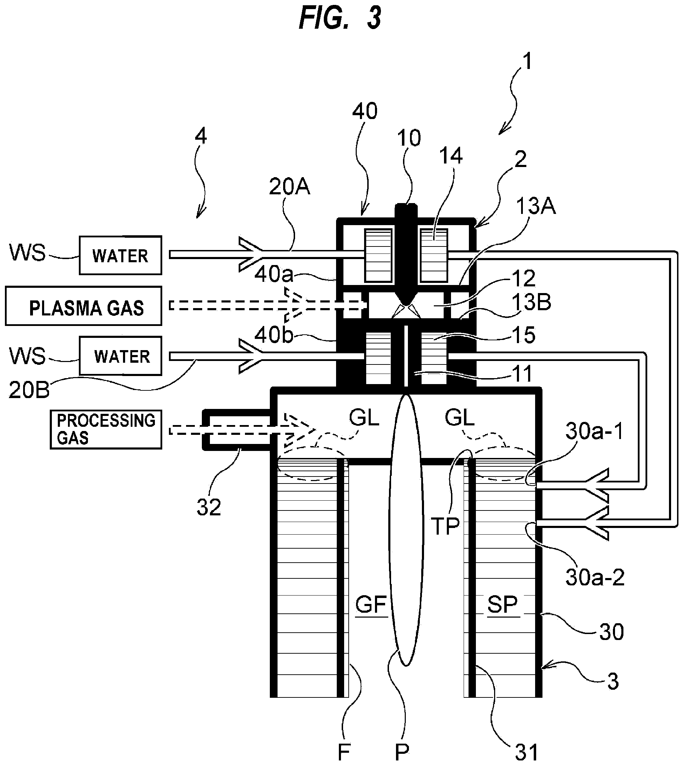

FIG. 3 is a view showing another embodiment of the liquid supply line. In the embodiment shown in FIG. 1, the liquid supply line 4 has the junction line 20C connected to the cathode side supply line 20A and the anode side supply line 20B, but as shown in FIG. 3, the liquid supply line 4 does not necessarily have to have the junction line 20C.

In the embodiment shown in FIG. 3, the liquid supply line 4 does not have the junction line 20C, but has the cathode side supply line 20A and the anode side supply line 20B connected to the upper portion of the outer cylinder 30.

The cathode side supply line 20A is connected to a communication port 30a-2 formed in the upper portion of the outer cylinder 30, and the anode side supply line 20B is connected to a communication port 30a-1 formed in the upper portion of the outer cylinder 30. In this embodiment, both of the communication ports 30a-1 and 30a-2 are disposed at a position lower than the upper end TP of the inner cylinder 31.

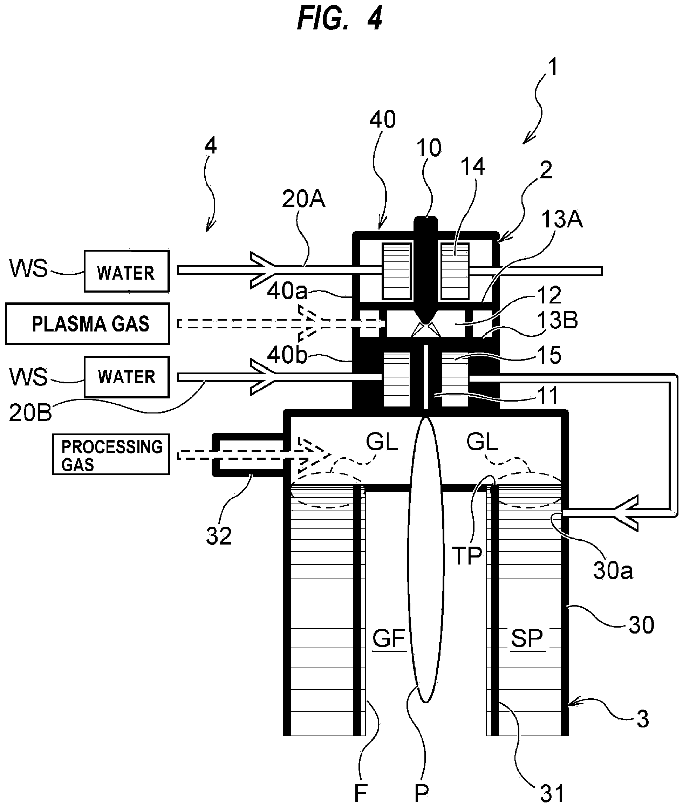

FIG. 4 is a view showing another embodiment of the liquid supply line. In the embodiment shown in FIG. 3, both the cathode side supply line 20A and the anode side supply line 20B are connected to the outer cylinder 30, but at least one of the cathode side supply line 20A and the anode side supply line 20B may be connected to the outer cylinder 30.

In the embodiment shown in FIG. 4, the cathode side supply line 20A is not connected to the outer cylinder 30. On the other hand, the anode side supply line 20B is connected to the communication port 30a formed in the upper portion of the outer cylinder 30. The liquid flowing through the cathode side supply line 20A may be discharged or recovered after cooling the cathode 10 in the cathode chamber 14. In one embodiment, the cathode side supply line 20A may be connected to the communication port 30a of the outer cylinder 30, while the anode side supply line 20B may not be connected to the outer cylinder 30.

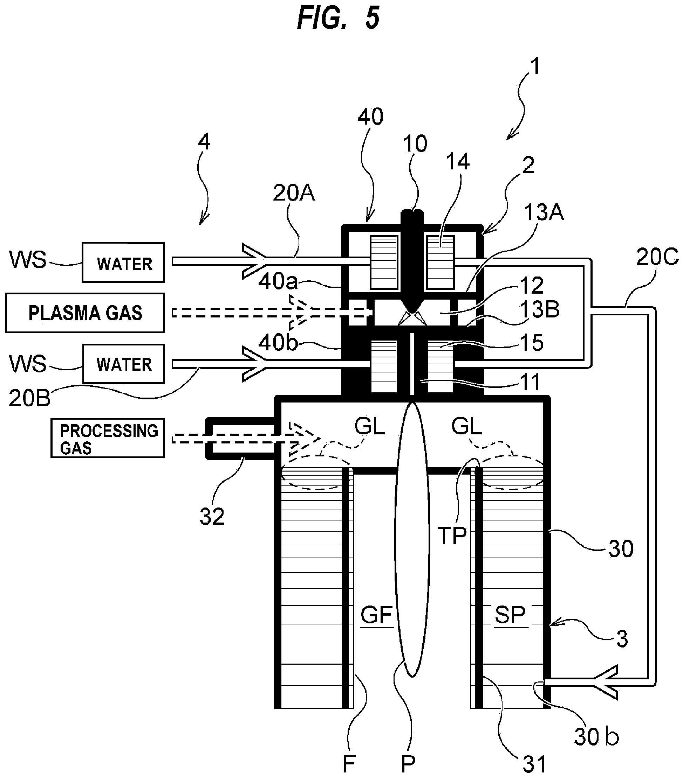

FIG. 5 is a view showing another embodiment of the liquid supply line. In the embodiment shown in FIG. 1 to FIG. 4, the liquid supply line 4 is connected to the upper portion of the outer cylinder 30, but as shown in FIG. 5, the liquid supply line 4 may be connected to a communication port 30b formed in a lower portion of the outer cylinder 30.

In the embodiment shown in FIG. 5, the liquid supply line 4 has the same configuration (i.e., the cathode side supply line 20A, the anode side supply line 20B, and the junction line 20C) as the liquid supply line 4 described with reference to FIG. 1. In one embodiment, the liquid supply line 4 may have the same configuration as the liquid supply line 4 described with reference to FIGS. 2 to 4.

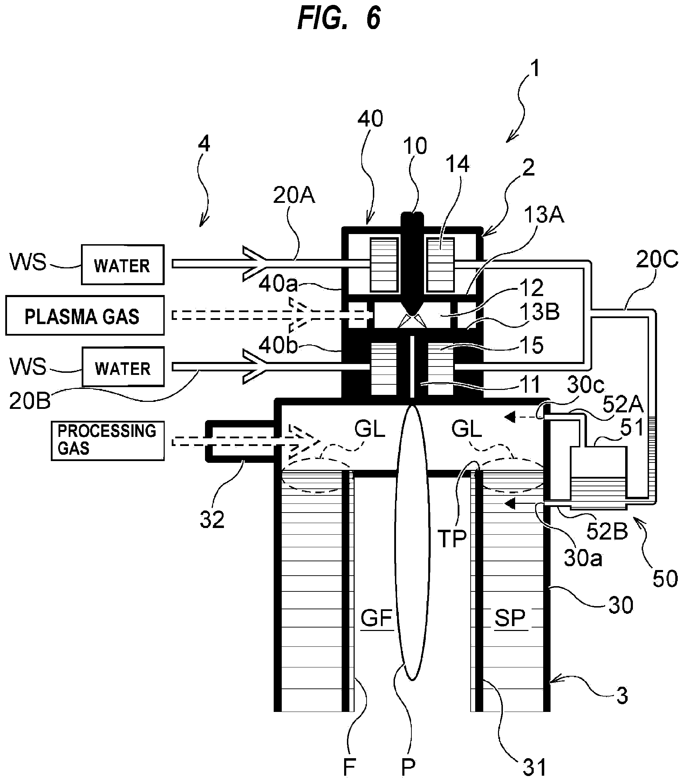

FIG. 6 is a view showing one embodiment of a gas-liquid separation tank. In the embodiment shown in FIG. 6, the exhaust gas treatment apparatus 1 includes a gas-liquid separation tank 50 connected to the liquid supply line 4 (more specifically, the joining line 20C).

The gas-liquid separation tank 50 is disposed downstream of the torch unit 2 in the flow direction of the liquid flowing through the liquid supply line 4. The gas-liquid separation tank 50 is configured to separate a gas contained in the liquid introduced therein.

When the gas-liquid separation tank 50 is applied to the liquid supply line 4 according to the embodiment described with reference to FIG. 3, the gas-liquid separation tank 50 may be connected to at least one of the cathode side supply line 20A and the anode side supply line 20B.

Depending on conditions such as the temperature of the torch unit 2 and a flow rate of the liquid supplied from the liquid supply source WS, a part of the liquid cooling the torch unit 2 may boil (evaporate), and the liquid (hot water) may contain water vapor. In this case, if the liquid containing water vapor is supplied to the gap SP between the inner cylinder 31 and the outer cylinder 30, the liquid film F may not be properly formed on an inner peripheral surface of the inner cylinder 31 due to the large amount of water vapor. The gas-liquid separation tank 50 can separate the gas from the liquid that has passed through the torch unit 2, and therefore can solve such problems.

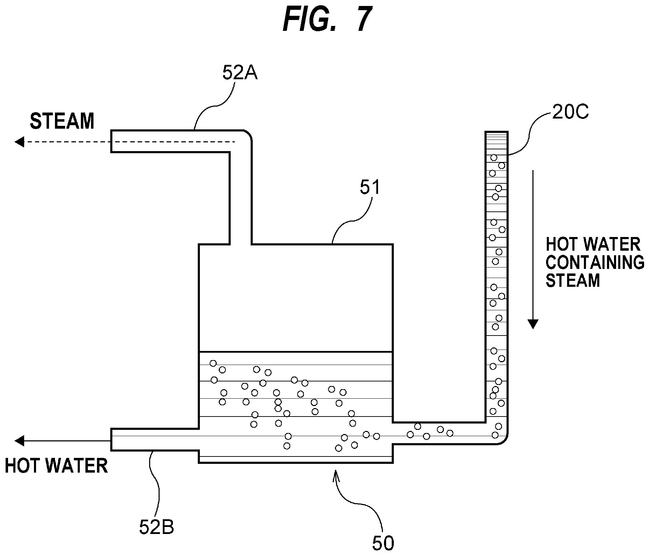

FIG. 7 is a view showing the gas-liquid separation tank shown in FIG. 6. As shown in FIG. 7, the gas-liquid separation tank 50 includes a tank portion 51 connected to the liquid supply line 4 (in the embodiment shown in FIGS. 6 and 7, the junction line 20C), and a gas introduction line 52A and a liquid introduction line 52B connected to the tank portion 51. In this embodiment, the gas introduction line 52A and the liquid introduction line 52B are components of the gas-liquid separation tank 50, but may be components of the liquid supply line 4.

The gas introduction line 52A is connected to the outer cylinder 30 at a position higher than the upper end TP of the inner cylinder 31 (i.e., above the gas-liquid interface GL). The liquid introduction line 52B is connected to the outer cylinder 30 at a position lower than the upper end TP of the inner cylinder 31 (i.e., below the gas-liquid interface GL).

The junction line 20C is connected to the lower portion of the tank portion 51. Therefore, when the liquid that has passed through the torch unit 2 is introduced into the tank portion 51, the liquid and the gas are separated in the tank portion 51. The gas contained in the liquid is introduced into the gas treatment reactor 3 through the gas introduction line 52A connected to the upper portion of the tank part 51. The tank portion 51 has a sufficient volume necessary to separate the gas from the liquid.

The processing gas thermally decomposed by the plasma jet P actively reacts with the gas introduced into the gas treatment reactor 3 through the gas introduction line 52A. Therefore, the reaction efficiency of the processing gas with water vapor can be further improved.

The liquid introduced into the gas treatment reactor 3 through the liquid introduction line 52B connected to the lower portion of the tank portion 51 gradually rises in the gap SP between the inner cylinder 31 and the outer cylinder 30, and overflows the upper end TP. The liquid overflowing the upper end TP forms the liquid film F on the inner wall surface of the inner cylinder 31.

The temperature at which the liquid boils (the boiling point) depends on the pressure of the liquid. Therefore, by supplying the liquid pressurized to a predetermined target pressure (e.g., 0. Number MPa), any amount of water vapor can be introduced into the gas treatment reactor 3.

Although not shown, the exhaust gas treatment apparatus 1 may include a flow rate control valve arranged upstream and/or downstream of the torch unit 2, and a temperature sensor arranged downstream of the torch unit 2. With this configuration, the exhaust gas treatment apparatus 1 can control the flow rate of the liquid flowing through the liquid supply line 4 based on the temperature of the torch unit 2. In this manner, the exhaust gas treatment apparatus 1 can control the amount of gas (water vapor) introduced into the gas treatment reactor 3.

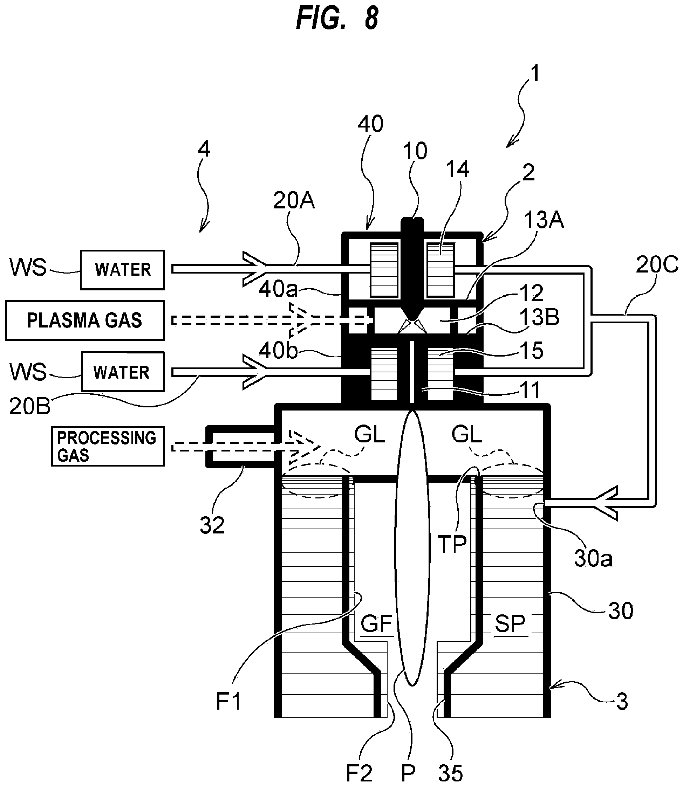

FIG. 8 is a view showing another embodiment of the gas treatment reactor. As shown in FIG. 8, the inner cylinder 31 may have a flow path throttle portion 35 that narrows the gas flow path GF. The flow path throttle portion 35 is formed in the lower portion of the inner cylinder 31, and reduces an inner diameter of the lower portion of the inner cylinder 31. The liquid film F formed on the inner wall surface of the inner cylinder 31 flows down the flow path throttle portion 35. In the embodiment shown in FIG. 8, the flow path throttle portion 35 has a tapered shape that gradually reduces the inner diameter of the inner cylinder 31, but may have a step shape that protrudes from the inner wall surface of the inner cylinder 31.

When nitrogen present in the gas flow path GF (e.g., nitrogen contained in the processing gas or plasma jet P) combines with oxygen, nitrogen oxides (NO_{X}) are generated. As shown in FIG. 8, by forming the flow path throttle portion 35, the processing gas (or plasma jet P) flowing through the gas flow path GF is rapidly cooled by the liquid film F flowing down the flow path throttle portion 35. By rapidly cooling the processing gas, the generation of nitrogen oxides can be suppressed.

In the embodiment shown in FIG. 8, the liquid supply line 4 has the same structure as the liquid supply line 4 according to the embodiment described with reference to FIG. 1, but may also have the same structure as the liquid supply line 4 described with reference to FIGS. 2 to 7.

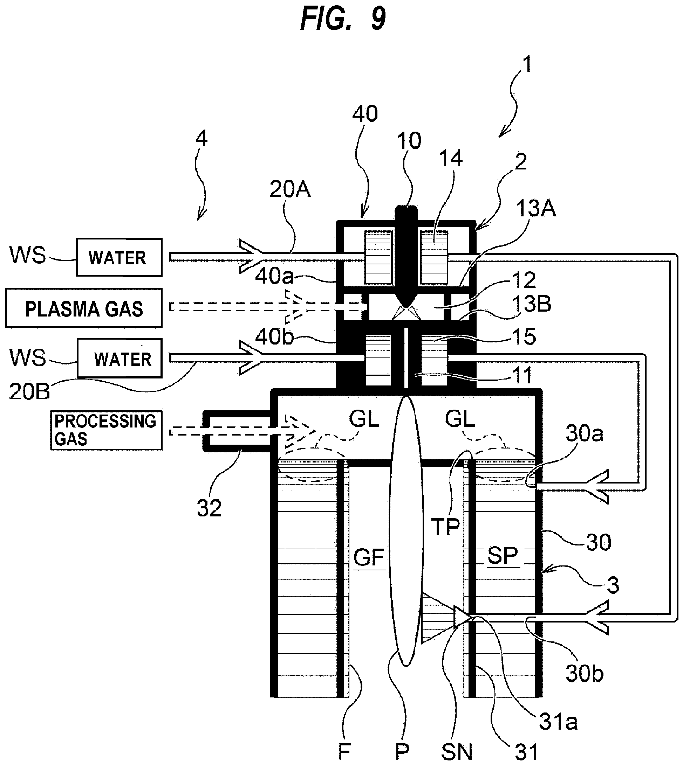

FIG. 9 is a view showing a spray nozzle that injects liquid into the gas flow path. As shown in FIG. 9, the exhaust gas treatment apparatus 1 may include a spray nozzle SN that injects liquid into the gas flow path GF. In the embodiment shown in FIG. 9, the liquid supply line 4 has the anode side supply line 20B that communicates with the gap SP between the outer cylinder 30 and the inner cylinder 31, and the cathode side supply line 20A that communicates with the gas flow path GF formed inside the inner cylinder 31.

More specifically, the anode side supply line 20B is connected to the communication port 30a formed in the upper portion of the outer cylinder 30. The cathode side supply line 20A extends through the communication port 30b formed in the lower portion of the outer cylinder 30 and is connected to a communication port 31a formed in the lower portion of the inner cylinder 31.

The spray nozzle SN is connected to a tip of the cathode side supply line 20A, in other words, to the communication port 31a, and is disposed facing the gas flow path GF. Therefore, the spray nozzle SN sprays the liquid flowing through the cathode side supply line 20A in a spray shape toward the processing gas (or the plasma jet P) flowing through the gas flow path GF. The liquid sprayed in a spray shape rapidly cools the processing gas flowing through the gas flow path GF. By rapidly cooling the processing gas, the generation of nitrogen oxides can be suppressed.

In the embodiment shown in FIG. 9, the cathode side supply line 20A extends to the gas flow path GF, and the anode side supply line 20B extends to the gap SP, but the anode side supply line 20B may extend to the gas flow path GF, and the cathode side supply line 20A may extend to the gap SP. In this case, the spray nozzle SN may be connected to the tip of the anode side supply line 20B.

The components of the embodiment described with reference to FIGS. 1 to 9 can be appropriately combined. For example, the components such as the gas-liquid separation tank 50, the flow path throttle portion 35, and the spray nozzle SN can be applied to the embodiment described with reference to FIGS. 1 to 9.

The previous description of embodiments is provided to enable a person skilled in the art to make and use the present invention. Moreover, various modifications to these embodiments will be readily apparent to those skilled in the art, and the generic principles and specific examples defined herein may be applied to other embodiments. Therefore, the present invention is not intended to be limited to the embodiments described herein but is to be accorded the widest scope as defined by limitation of the claims.

## Claims

1. An exhaust gas treatment apparatus comprising:
a torch unit configured to generate a high-temperature jet;
a gas treatment reactor having a gas flow path through which a processing gas thermally decomposed by the jet flows;
a liquid supply line configured to supply a liquid to the torch unit and then supply the liquid heated by the torch unit to the gas treatment reactor; and
a liquid supply source connected to the liquid supply line.

2. The exhaust gas treatment apparatus according to claim 1, wherein the torch unit comprises:
a cathode chamber in which a cathode is disposed; and
an anode chamber in which an anode is disposed, and
wherein the liquid supply line comprises:
a cathode side supply line configured to supply the liquid to the cathode chamber; and
an anode side supply line configured to supply the liquid to the anode chamber.

3. The exhaust gas treatment apparatus according to claim 2, wherein the liquid supply line has a junction line connected to the cathode side supply line and the anode side supply line.

4. The exhaust gas treatment apparatus according to claim 2, wherein at least one of the cathode side supply line and the anode side supply line is connected to the gas treatment reactor.

5. The exhaust gas treatment apparatus according to claim 1, wherein the torch unit comprises:
a cathode chamber in which a cathode is disposed; and
an anode chamber in which an anode is disposed, and
wherein the liquid supply line is configured to supply the liquid to one of the cathode chamber and the anode chamber, and then supply the liquid to the other of the cathode chamber and the anode chamber.

6. The exhaust gas treatment apparatus according to claim 1, wherein the liquid supply line is configured to supply the liquid to an upper portion of the gas treatment reactor.

7. The exhaust gas treatment apparatus according to claim 1, wherein the gas treatment reactor comprises:
an inner cylinder configured to form the gas flow path; and
an outer cylinder configured to surround the inner cylinder, and
wherein the inner cylinder has an upper end that serves as an overflow weir for the liquid supplied from the liquid supply line.

8. The exhaust gas treatment apparatus according to claim 7, wherein the exhaust gas treatment apparatus comprises a gas-liquid separation tank connected to the liquid supply line, and
wherein the gas-liquid separation tank is disposed downstream of the torch unit in a flow direction of the liquid.

9. The exhaust gas treatment apparatus according to claim 8, wherein the gas-liquid separation tank comprises:
a gas introduction line connected to the outer cylinder at a position higher than the upper end; and
a liquid introduction line connected to the outer cylinder at a position lower than the upper end.

10. The exhaust gas treatment apparatus according to claim 7, wherein the inner cylinder has a flow path throttle portion configured to narrow the gas flow path.

11. The exhaust gas treatment apparatus according to claim 1, wherein the exhaust gas treatment apparatus comprises a spray nozzle configured to inject the liquid into the gas flow path.

12. The exhaust gas treatment apparatus according to claim 1, wherein the exhaust gas treatment apparatus is an atmospheric pressure plasma type exhaust gas treatment apparatus, and
wherein the torch unit has a non-transferred plasma torch structure.

13. An exhaust gas treatment method comprising:
supplying a liquid supplied from a liquid supply source to a torch unit configured to generate a high-temperature jet; and
then, supplying the liquid heated by the torch unit to a gas treatment reactor having a gas flow path through which a processing gas thermally decomposed by the jet flows.

14. The exhaust gas treatment method according to claim 13, comprising supplying the liquid to a cathode chamber in which a cathode is disposed and an anode chamber in which an anode is disposed in the torch unit.

15. The exhaust gas treatment method according to claim 14, comprising supplying the liquid to one of the cathode chamber and the anode chamber, and then supplying the liquid to the other of the cathode chamber and the anode chamber.

16. The exhaust gas treatment method according to claim 13, comprising:
separating a gas contained in the liquid after passing through the torch unit;
supplying the gas to a position higher than an upper end of an inner cylinder configured form the gas flow path of the gas treatment reactor; and
supplying the liquid to a position lower than the upper end.
